Europäisches Patentamt

European Patent Office

Office européen des brevets

(11) Publication number: **0 145 507**
**A1**

# (12) EUROPEAN PATENT APPLICATION

(21) Application number: **84401379.7**

(22) Date of filing: **28.06.84**

(51) Int. Cl.⁴: **B 23 Q 1/28**

(30) Priority: **29.08.83 JP 157502/83**
**22.09.83 JP 175964/83**

(43) Date of publication of application: **19.06.85**
**Bulletin 85/25**

(84) Designated Contracting States: **CH DE FR GB LI**

(71) Applicant: **KABUSHIKI KAISHA MYOTOKU, 6-18, Shimomaruko 2-chome Ota-ku, Tokyo 146 (JP)**

(72) Inventor: **Kato, Minoru c/o Kabushiki Kaisha Myotoku, 6-18, Shimomaruko 2-chome, Ota-Ku Tokyo (JP)**
Inventor: **Tachikawa, Keiichi c/o Kabushiki Kaisha Myotoku, 6-18, Shimomaruko 2-chome, Ota-Ku Tokyo (JP)**
Inventor: **Ise, Yoji c/o Kabushiki Kaisha Myotoku, 6-18, Shimomaruko 2-chome, Ota-Ku Tokyo (JP)**

(74) Representative: **Cabinet BERT, DE KERAVENANT & HERRBURGER, 115, Boulevard Haussmann, F-75008 Paris (FR)**

(54) Apparatus for moving and stopping tools.

(57) An apparatus for moving and stopping tools wherein a fixed ceiling (1) is provided above a moving block (9) movable forward, rearward, rightward and leftward, an air sucking hole (12) is provided on the upper surface of the moving block (9) and a sealing member (13) to closely contact the lower surface of the fixed ceiling (1) is provided on the periphery of the upper surface so that the upper surface of the moving block (9) may be freely sucked to the fixed ceiling (1) and vertically movable fitting parts for tools A and A' are provided below the moving block.

SPECIFICATION

Title of the Invention:

APPARATUS FOR MOVING AND STOPPING TOOLS

### Field of the Invention

This invention relates to an apparatus for moving and stopping tools wherein tools can be moved to any front, rear, right, left, upper and lower positions and can be perfectly stopped and fixed in any predetermined positions, the moving precision is high, high load works are possible when the tools are stopped and fixed and further an air sliding system can be easily adopted to obtain the effects of reducing the friction coefficient with nonfriction, improving the durability and producing no mechanical noise in such case.

By the way, the present invention can be utilized also to move and stop works.

### Background of the Invention

In various automated machines, it is necessary that tools should be moved to any positions and perfectly stopped.

Motors or cylinders have been conventionally used for the above mentioned movement and perfect stop. However, for the movement in any directions, it is necessary to combine many motors or cylinders. There
has been a defect that the apparatus is thus very complicated and expensive.

Further, in the above mentioned conventional
apparatus, it has been difficult to maintain a high
load in a perfectly stationary state and it has been
necessary to increase the strength of the members and
to provide various accessories.

In the present invention made by eliminating
such defects as are mentioned above, first the tools
can be accurately moved to any front, rear, right,
left, upper and lower positions, second the tools can
be fixed so as to be endurable to high loads when
stopped in predetermined positions and third an air
sliding system can be adopted as required.

## Summary of the Invention

According to the present invention, a fixed
ceiling is provided above a moving block made movable
forward, rearward, leftward and rightward and a sealing
member to closely contact the lower surface of the
above mentioned fixed ceiling is provided on the
periphery of the upper surface of the moving block
and is made to closely contact the fixed ceiling in
a predetermined stopping position so as to discharge
air on the upper surface of the moving block enclosed

-3-

with the sealing member and to make the upper surface of the moving block closely contact the lower surface of the fixed ceiling so as to be fixed.

By the way, tool fitting parts movable up and down are formed in the above mentioned moving block.

The objects and advantages of the present invention will become clear from the following description and drawings.

## Brief Description of the Drawings

Fig. 1 is a general perspective view of the present invention as seen from above.

Fig. 2 is a general perspective view of the present invention as seen from below.

Fig. 3 is a vertically sectioned view of an essential part.

Figs. 4 to 6 are sectioned views respectively showing operating states of a moving block.

## Detailed Description of the Invention

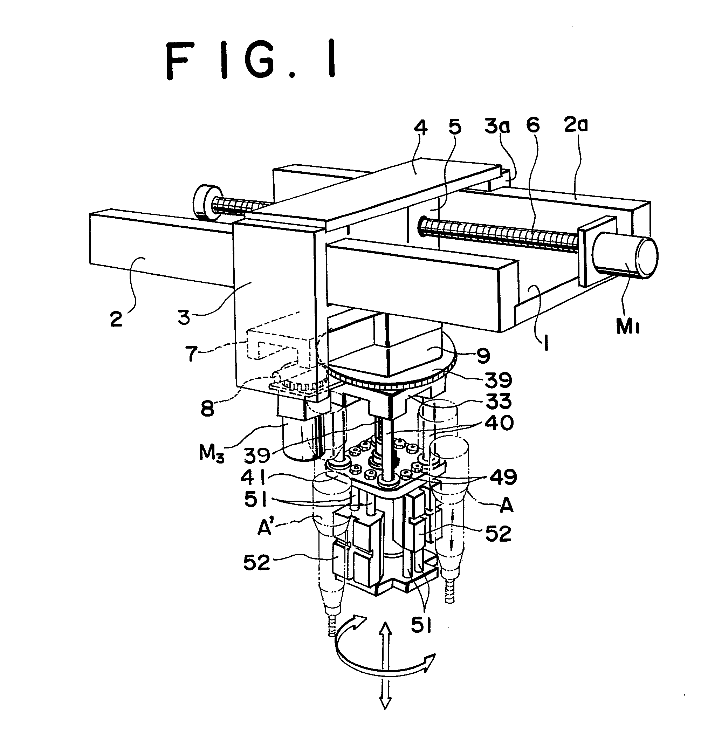

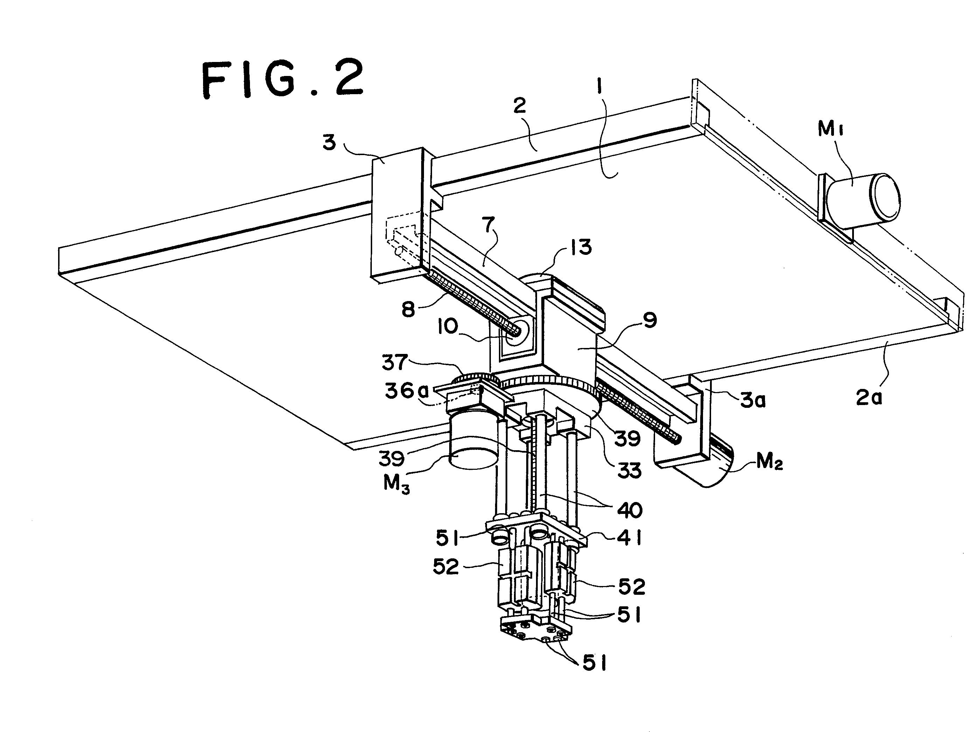

As shown in Figs. 1 and 2, the present invention is provided with a fixed ceiling 1.

Said fixed ceiling 1 is so formed as to have a flat smooth lower surface to be supported at a predetermined level together with guide rails 2 and 2a provided on both sides of the ceiling and not to be flexed.  The above mentioned guide rails 2 and 2a are fitted respectively with sliders 3 and 3a.

Said sliders 3 and 3a are so formed as to respectively fit the outside surfaces and upper and lower surfaces of the guide rails 2 and 2a and to slide respectively along the guide rails 2 and 2a.

Then the upper parts of the above mentioned sliders 3 and 3a are connected with each other through a connecting plate 4 above the fixed ceiling 1 so as to be movable.

In the case of the embodiment in the drawings, a ball nut 5 is provided on the connecting plate 4 side, a screw rod 6 supported on the fixed ceiling 1 side is screwed through said ball nut 5 so that, when the screw rod 6 is rotated by a motor $M_1$, the connecting plate 4 and sliders 3 and 3a will be moved.

Then a guide rail 7 and screw rod 8 are provided between the lower parts of the above mentioned sliders 3 and 3A.

In the case of the embodiment in the drawings, the guide rail 7 is so formed as to be of a channel in the cross-section, the screw rod 8 is rotatably supported below the guide rail 7 and a motor $M_2$ to rotate said screw rod 8 is provided on the slider 3a part at one end of the screw rod 8.

Further, there is provided a moving block 9 enclosing the above mentioned guide rail 7 and screw rod 8, movable up and down and moved by the screw rod 8.

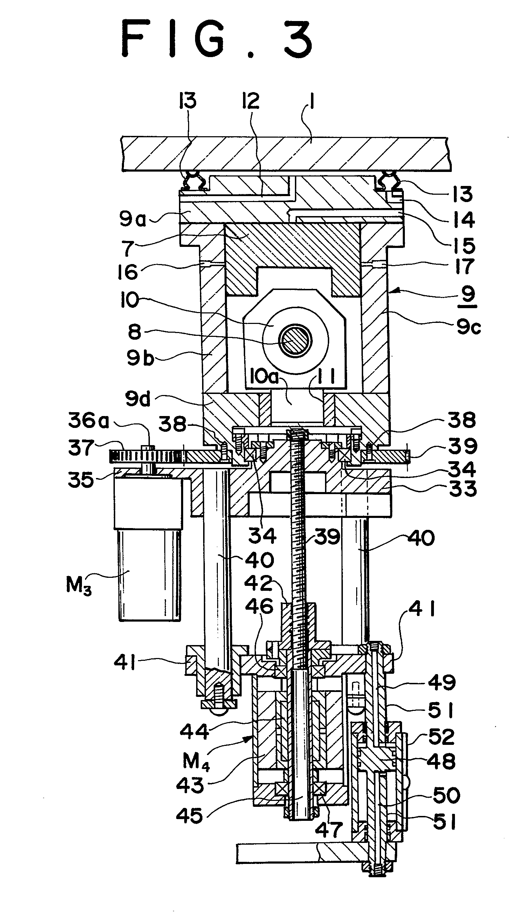

The details of the moving block 9 are shown in Figs. 3, 4, 5 and 6. That is to say, the moving block 9 is formed of an upper plate 9a positioned on the upper surface of the guide rail 7 and side plates 9b and 9c and a bottom plate 9d positioned on both sides and extended to below the screw rod 8 and has the screw rod 8 and a ball nut 10 screwed with the screw rod 8 positioned within it.

The above mentioned moving block 9 is so formed as to move up and down with respect to the screw rod 8 and ball nut 10 and to be integral with them when sliding.

That is to say, an extended part 10a is provided below the ball nut 10 and is vertically movably fitted in a through hole 11 made in the bottom plate 9d of the moving block 9.

Then an air sucking port 12 is provided on the upper surface of the above mentioned moving block 9 or concretely on the upper surface of the upper plate 9a and a flexible sealing member 13 to closely contact the lower surface of the fixed ceiling 1 is provided on the periphery of the upper surface.

In the case of the illustrated embodiment, the above mentioned sealing member 13 to closely contact the fixed ceiling 1 is so formed as to be flexible, to be tubular, to be contracted normally and to be inflated to closely contact the lower surface of the fixed ceiling 1 when air is fed into it.

In the drawings, the reference numeral 14 denotes a port to feed air to the above mentioned sealing member 13. By the way, an actuator may be used as a mechanism of making the above mentioned sealing member 13 closely contact the fixed ceiling 1.

Further, in the embodiment shown in Figs. 3, 4, 5 and 6, air jets 15, 16 and 17 are provided respectively on the surfaces opposed to the guide rail 7 of the moving block 9 or concretely on the upper plate 9a and side plates 9b and 9c so as to feed compressed air to form an air film between the guide rail 7 and moving block 9 when sliding, to make noncontact sliding possible and to reduce the frictional resistance.

The same formation can be applied also between the guide rails 2 and 2a and sliders 3 and 3a.

That is to say, air jetting ports (not illustrated) may be provided respectively on the surfaces of the sliders 3 and 3a opposed to the outside surfaces and upper and lower surfaces of the guide rails 2 and 2a.

In the drawings, 21 is an air sucking hose, 22 is an ejector turbo-pump to be a vacuum source, 23 is a switching valve, 24 is such compressed air feeding source as a compressor, 25 is an air feeding hose, 26 is a switching valve, 27 is a regulator, 28 is such air feeding source as a compressor, 29 and 29a are air feeding hoses, 30 is a switching valve, 31 is a regulator and 32 is such air feeding source as a compressor.

In the present invention, tool fitting parts movable up and sown are formed below the above mentioned moving block 9. That is to say, a rotatable plate 33 is first provided below the above mentioned moving block 9.

The above mentioned rotatable plate 33 is supported through a bearing 34 between it and the moving block 9. A motor $M_3$ is provided through an arm 35 on the rotatable plate 33 side. A gear 37 provided on a rotary shaft 36a of the motor $M_3$ is meshed with a gear 39 fixed with bolts 38 on the above mentioned moving block 9 side.

Therefore, when the motor $M_3$ is driven, the rotatable plate 33 will be rotated by a proper angle.

Then a screw rod 39 is fixed in the central part of the above mentioned rotatable plate 33.

Further, a proper number of guide rods 40 are provided parallelly with said screw rod 39.

Then a supporting plate 41 is provided slidably on the above mentioned guide rods 40. A nut 42 rotated by a motor $M_4$ and screwed with the above mentioned screw rod 39 is supported on said supporting plate 41.

That is to say, the motor $M_4$ is supported on the stationary side 43 below the supporting plate 41 and a center shaft 45 of a rotary part 44 in the central part of the motor $M_4$ is made hollow so that the above mentioned screw rod 39 may be inserted through the center shaft 45 and is further rotatably supported on the supporting plate 41 side and the stationary side 43 of the motor $M_4$ with bearings 46 and 47.

The nut 42 is fixed to the upper end of the above mentioned center shaft 45.

Therefore, when the rotary part 44 of the motor $M_4$ is rotated, the nut 42 will be simultaneously rotated and the supporting plate 41 will slide vertically along the screw rod 39 and guide rods 40.

Further, in the present invention, a proper number of piston rods 51 each having through holes 49 and 50 opening respectively at the upper end and lower

—9—

end of a piston 48 formed in the intermediate part are supported by the supporting plate 41. Further, a cylinder 52 is vertically movably fitted to the above mentioned piston 48 and piston rod 51 parts.

That is to say, the cylinder 52 is moved up or down by feeding air through the through hole 50 or 49 at the lower end or upper end of the piston rod 51.

By the way, in the embodiment in Figs. 1 and 2, two piston rods 51 are provided to integrally form the cylinder 52 but even one piston rod may do.

In the present invention, the outside surface of the above mentioned cylinder 52 is made a tool fitting part to fit such tool A as a drill.

By the way, though the details are not shown in the drawings, a fixture for the tool A is provided in advance on the outside surface of the cylinder 52.

In the present invention of the above mentioned formation, the already described moving block 9 is moved to any position by the motors $M_1$ and $M_2$.

That is to say, in Figs. 1 and 2, the moving block is moved rightward and leftward by rotating the screw rod 6 with the motor $M_1$ and forward and rearward by rotating the screw rod 8 with the motor $M_2$. In

either case, compressed air will be jetted through the above mentioned respective air jetting ports 15, 16 and 17 to move the sliders 3 and 3a and moving block 9 in a noncontacting state.

The perfect stop in the case that the moving block 9 has been moved to a predetermined position shall be described in the following.

That is to say, the moving block 9 will be supported by the guide rail 7 and the compressed air jetting will be stopped.

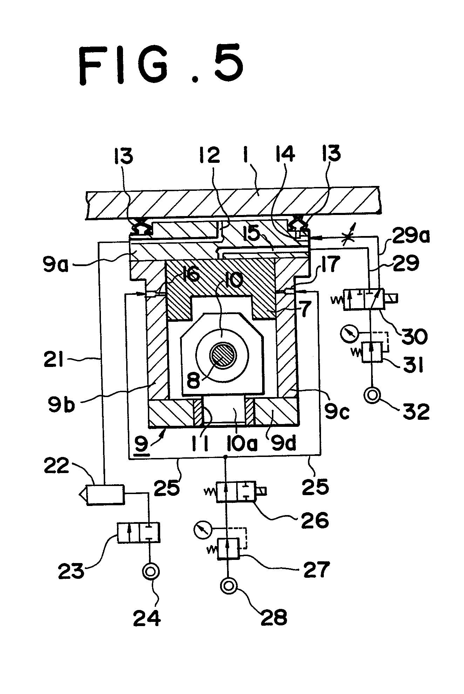

Then, as shown in Fig. 5, the switching valve 30 is switched to feed air into the air feeding port 14 of the sealing member 13 through the air feeding hose 29a.

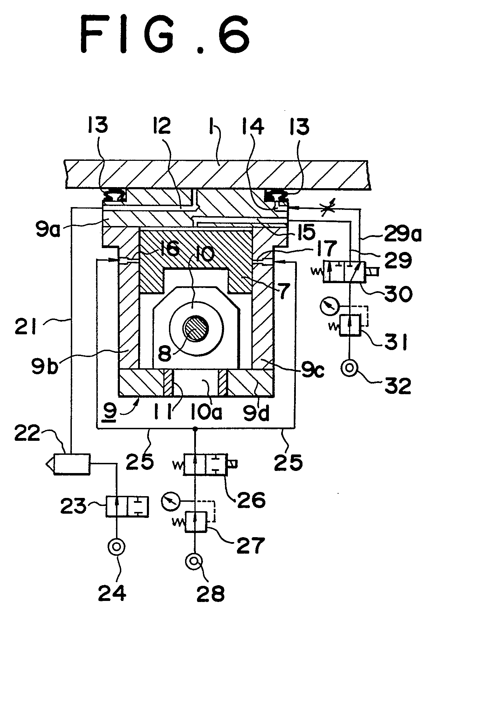

As a result, the sealing member 13 will be inflated to closely contact at the upper end with the lower surface of the fixed ceiling 1. After confirming it, compressed air is fed to the ejector pump 22 from the compressed air feeding source 24 to discharge air on the upper surface of the moving block 9 enclosed with the sealing member 13 through the air sucking hose 21 from the air sucking port 12. As a result, the upper surface of the moving block 9 enclosed with the sealing member will become a vacuum and finally, as shown in Fig. 6, the moving block 9 will rise to the fixed ceiling 1 side and will closely contact the lower surface of the ceiling 1 so as to be fixed.

Then the tool A in the predetermined position can be selected by the motor $M_3$ and moved up and down by the vertical movements of the motor $M_4$ and cylinder 52.

By the way, generally, while one tool A is being used, another tool A' will have been moved up by the cylinder 52, though a plurality of tools A and A' can be simultaneously operated.

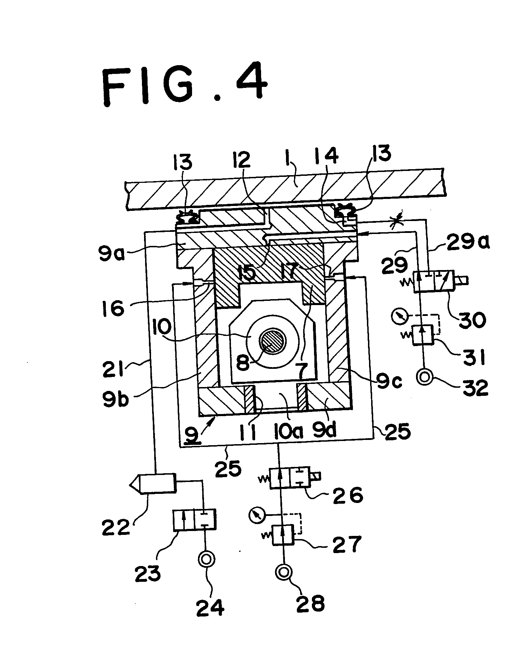

Now, in case the above mentioned moving block 9 is to be released from the closely contacting fixation, if the air feed to the ejector pump 22 from the compressed air feeding source 24 is stopped, the upper surface of the moving block 9 enclosed with the sealing member will be released to the atmosphere through the air sucking hose 21 and further, if the air feed to the sealing member 13 is stopped, the moving block 9 will lower under its own weight and will return to the state in Fig. 4 so as to be free to move.

As mentioned above, in the present invention, there are obtained effects that a moving block can be perfectly fixed to the lower surface of a fixed ceiling, is perfectly controlled in the forward, rearward, rightward and leftward movements, is regulated by the fixed ceiling in the vertical movement, can keep a high precision without being moved even in case a high load is applied to tools, is easily air-slid in its entirety with the friction coefficient reduced by the noncontact, can be controlled with small high precision motors, can improve the durability and produces no mechanical noise.

0145507

## Claim

An apparatus for moving and stopping tools characterized in that sliders are fitted respectively to guide rails provided on both sides of a fixed ceiling and are connected with each other in the upper parts above the fixed ceiling so as to be movable, a guide rail and rotatable screw rod are provided between the lower parts of the above mentioned sliders, a moving block movable up and down and slid by the screw rod is provided to enclose said guide rail and screw rod, an air sucking hole is provided on the upper surface of said moving block, a sealing member to closely contact the lower surface of the fixed ceiling is provided on the periphery of said upper surface and tool fitting parts movable up and down are provided below the moving block.

0145507

1/6

F I G. 1

# FIG.2

3/6

0145507

# FIG. 3

4/6

# FIG.4

5|6

# FIG.5

0145507

# FIG.6

European Patent Office

**EUROPEAN SEARCH REPORT**

0145507

. Application number

EP 84 40 1379

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 943 510 (MÜLLER)<br>* Claims 1, 5; page 2, lines 1-67; figures 1, 2 * | 1 | B 23 Q 1/28 |
| Y | DE-U-7 034 659 (ZEISS)<br>* Page 2, lines 5-29; page 4, lines 7-27; figures 1, 2 * | 1 | |
| Y | DD-A- 122 211 (RÖSSEL)<br>* Page 2, right hand column, lines 10-49; figures 1, 2 * | 1 | |
| A | DE-A-2 854 856 (CANNON K.K.)<br>* Page 6, line 19 - page 7, line 19; figures 1, 2 * | 1 | |
| A | US-A-3 377 111 (BRAULT)<br>* Column 4, line 72 - column 5, line 18; figures 5, 6 * | 1 | TECHNICAL FIELDS SEARCHED (Int. Cl.4)<br><br>B 23 B 39/00<br>B 23 Q 1/00<br>B 23 Q 3/00 |
| A | US-A-2 443 987 (MORRISON et al.)<br>* Claim 1; column 4, lines 15-19; figure 5 * | 1 | B 25 B 11/00<br>B 65 G 7/06<br>F 16 C 29/02<br>F 16 C 32/06 |
| A | GB-A-1 398 102 (MESSER GRIESHEIM GMBH)<br>* Page 2, lines 49-60 * | 1 | |
| A | US-A-3 559 509 (MÜLLER) | | |

The present search report has been drawn up for all claims

| Place of search | Date of completion of the search | Examiner |
|---|---|---|
| BERLIN | 26-11-1984 | MARTIN A E W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82